# EUROPEAN PATENT SPECIFICATION

(11) **EP 1 340 659 B1**
(45) Date of publication and mention of the grant of the patent: **05.09.2012**
(21) Application number: 03001606.7
(22) Date of filing: 24.01.2003
(51) Int. Cl.: B60T 1/06, F16D 65/22, F16D 51/22

(54) **Parking brake actuating mechanisms**
Betätigungsmechanismus für Feststellbremsen
Mécanisme d'actionnement pour frein de stationnement

(30) Priority: 19.02.2002 GB 0203894
(43) Date of publication of application: 03.09.2003
(73) Proprietor: Automotive Products (Italia) S.p.A., 17014 Cairo Montenotte (Savona) (IT)
(72) Inventor: Girini, Adriano, 17014 Cairo Montenotte (IT); Tessitore, Luigi, 17100 Savona (IT)
(74) Representative: Neumann, Stephan

(56) References cited:
- EP-A- 1 098 102
- EP-A- 1 174 627
- WO-A-01/21976
- PATENT ABSTRACTS OF JAPAN vol. 2000, no. 07, 29 September 2000 (2000-09-29) -& JP 2000 108856 A (HOSEI BRAKE IND LTD), 18 April 2000 (2000-04-18)

## Description

This invention relates to parking brake actuating mechanisms according to the preamble of claim 1.

There is an increasing requirement in the industry to make the attachment of actuating cables to parking brake mechanisms a process which can be carried out on the vehicle assembly line without the need for the brake to be disassembled to give access to the internals of the parking brake actuating mechanism. Such mechanisms are called blind assembly mechanisms

An example of such a parking brake actuating mechanism is shown in the Applicant's own earlier International Patent Application No. WO01/21976A1 in which there is disclosed a parking brake actuating mechanism of the type specified in which the first lever includes an actuating cable abutment formation against which an actuating cable nipple on a free end of the cable is drawn to move the first lever hence operating the mechanism, the first lever also being of hollow form defining a guide passage through which the free end of the cable is directed from an aperture in the backplate of the associated brake to a location adjacent to the abutment formation to enable the nipple to be engaged with the formation. Such a brake actuating mechanism hereinafter being referred to as of the kind claimed.

Whilst such a parking brake actuating mechanism of the kind claimed has proved successful regarding blind assembly it is also necessary to ensure that the cable remains engaged with the abutment formation on the first lever at all times.
EP 1 174 627 B1 teaches a cable connecting apparatus comprising a leaf spring mounted on a lever to maintain a cable nipple in position. Providing an improved installation is an object of the present invention.

Thus in accordance with the present invention in a brake actuating mechanism of the kind claimed a spring means is provided which tends to maintain the cable nipple in a position for engagement with the abutment formation on the first lever. The spring means comprise a leaf-spring carried on the first lever which tends to maintain the cable in a portion of the first lever where is will remain engaged with the abutment formation, wherein the leaf spring has spring portion and tabs for mounting in a notch of the lever.

In one form of this improvement the guide passage through the hollow lever has a cross section part of which allows the passage therethrough of the cable nipple and part of which is narrow and will not allow passage of the nipple, one end of the narrow portion of the passage forming the abutment formation and the spring means tending to maintain the cable in the narrow part of the passage after the free end of the cable has emerged from the passage.

In accordance with a further improvement the leaf-spring may also be shaped to tend to deflect the nipple towards the abutment formation when it emerges from the passage.

The leaf spring is preferably shaped to limit the distance which the nipple can move away from the abutment formation. This shaping of the leaf spring also stops over insertion of the cable into the brake during installation.

The leaf spring may be shaped to apply pressure to the nipple to retain the nipple against the abutment formation.

In accordance with a still further improvement of the present invention in a brake actuating mechanism of the kind claimed the first lever is shaped to tend to hold the cable nipple in engagement with the abutment formation when the cable is pulled to operate the mechanism.

This is conveniently achieved by arranging the guide passage through the hollow lever to have a cross section part of which has a wider cross section which allows the passage therethrough of the cable nipple and part of which is narrow and will not allow passage of the nipple, one end of the narrow portion of the passage forming the abutment formation against the nipple is drawn after the free end of the cable has emerged from the passage and this end of the narrow portion of the passage being inclined to the line of action of the cable to bias the nipple and hence the associated portion of the cable into the narrow portion of the passage when the cable is pulled to operate the mechanism.

The spring means may be used in combination with the shaping of the first lever the second to provide a particularly reliable arrangement for ensuring that the nipple remains in contact with the abutment formation. Alternatively, these features may be used separately.

A spring guide may also be used to guide the free end of the cable from the aperture in the backplate into the hollow guide passage of the first lever. This spring guide may also act as a return spring for the parking brake actuating mechanism to help disengage the parking brake when the cable is released. Conveniently, such a spring guide will comprise a coil spring, extending between the backplate and the first lever down the centre of which the cable is threaded.

The second lever may also be shaped to assist in guiding the nipple into engagement with the abutment formation when the nipple emerges from the passage.

A parking brake actuating mechanism in accordance with the invention is suitable for use in a normal drum brake or in a so-called drum-in-disc brake. Also, the mechanism may be engaged between portions of separate brake shoes or between different portions of a single curved brake shoe.

One embodiment of the present invention will now be described with reference to the accompanying drawings in which:

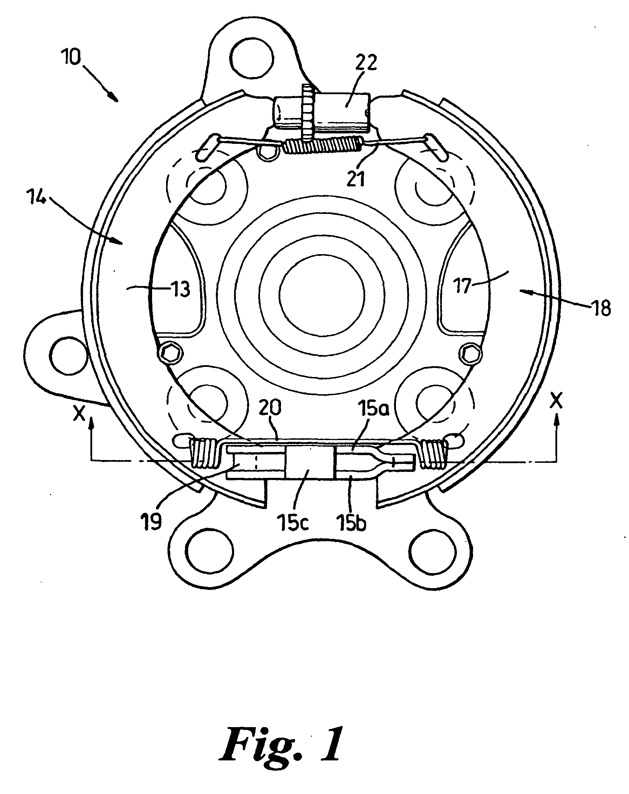

Figure 1 shows a side view of part of a drum-in-disc parking brake actuating mechanism in accordance with the present invention;
Figures 2 and 3 show a sections on line X-X of figure 1 with the actuating cable partially installed and fully installed respectively, and
Figure 4 shows a perspective view of the two levers of the actuating mechanism .

Referring to the drawings the drum -in- disc parking brake mechanism 10 comprises a first lever 11 having a first contact zone 12 for engagement with a web 13 of an associated brake shoe 14 and a second lever 15 having a second contact surface 16 for engagement with the web 17 of a second brake shoe 18. The two levers 11 and 15 are pivotally interconnected at 19 so that, in conventional manner, pivoting of first lever in direction P results in an increase in the distance between the first and second contact zones 12 and 16 to force the brake shoes 14 and 18 apart causing them to engage with an associated drum (not shown). As is conventional the brake includes return springs 20 and 21 which acts between the shoes and an adjustment device 22 enabling the drum brake to be manually adjusted. Also second lever 15 has two limbs 15a and 15b joined by a bridging piece 15c.

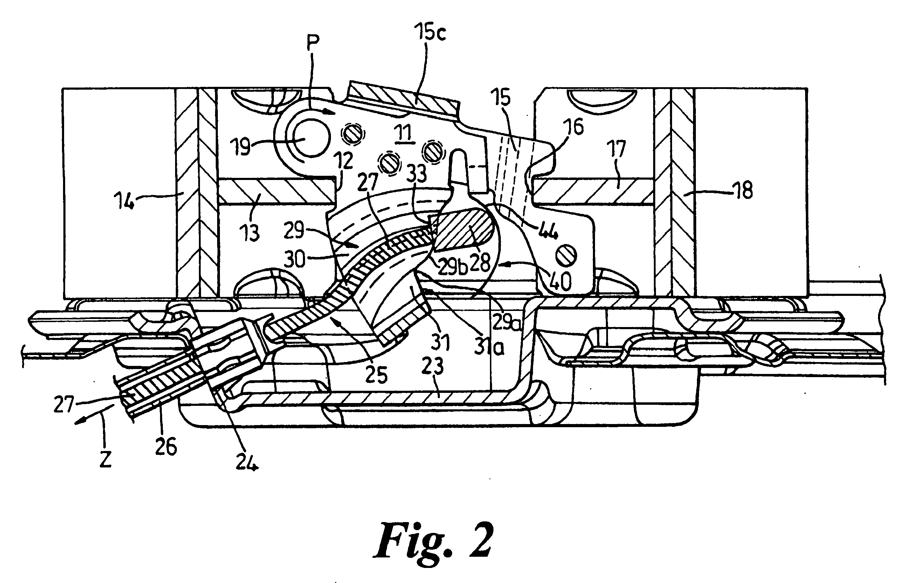

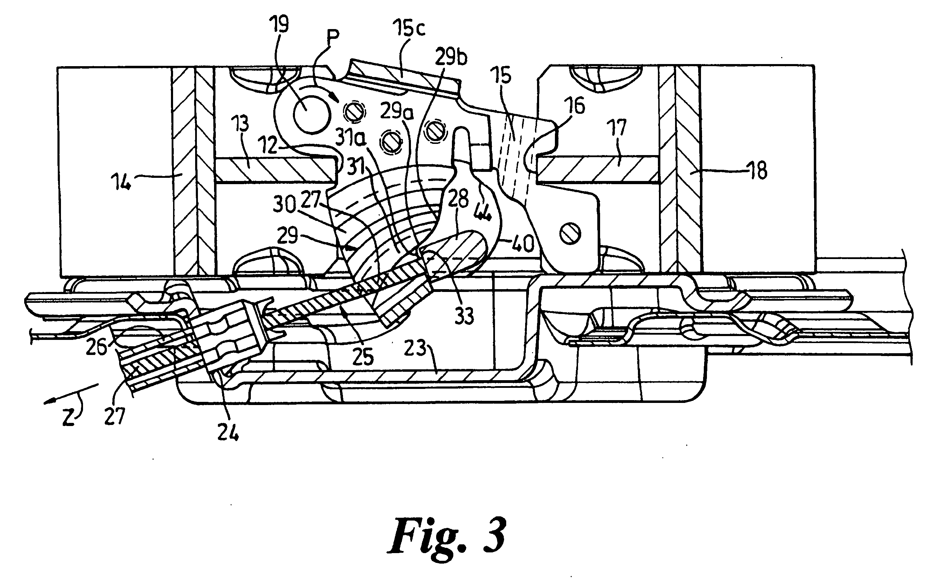

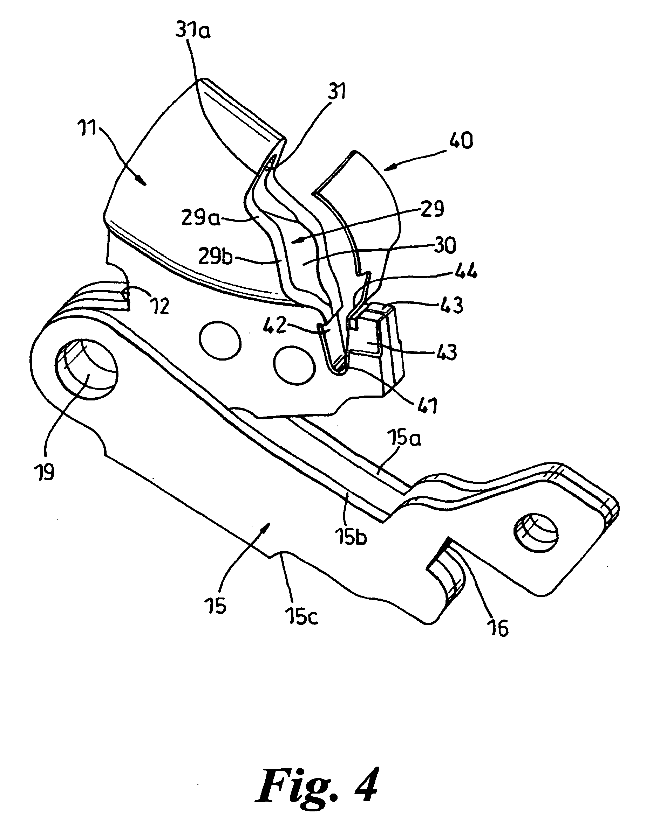

The shoes 14 and 18 are mounted on a back plate 23 which includes an aperture 24 through which a parking brake actuating cable 25 extends. The cable has an outer sheath 26 which is gripped in aperture 24 and an inner member 27 whose free end terminates in a nipple 28. As can be seen from figures 2 to 4, first lever 11 is of hollow pressed metal form and includes a longitudinally extending passage 29 whose cross section includes a wider portion 30(see Fig 4) through which the nipple 28 can pass and a narrower portion 31 through which the nipple cannot pass. As shown in figure 3, the inner 27 of the cable can be threaded through the wider portion 30 of passage 29.

In accordance with the present invention a leaf spring 40 is mounted on lever 11 in a notch 41 by clip portion 42 and tabs 43. Spring 40 includes a cam portion 44 which is contacted by the nipple 28 as the nipple emerges from the passage 29 and which tends to deflect the nipple 28 towards a fully installed position shown in Figure 3 in which a shoulder 33 of nipple 28 contacts an end 31a of the narrow portion 31 of passage 29 when the cable inner 27 is drawn in direction Z of figure 2 so that the first lever 11 is pivoted in direction P and hence the actuating mechanism is operated. End 31a of narrow passage portion31 forms the abutment formation of lever 11.

In accordance with a further improvement of the present invention the end of the passage 29 is shaped in regions 29a and 29b so as to tend to retain the nipple 28 in a position to engage end 31a of the narrow passage portion 31. Note ,for example, the shoulder region 29a.

As will be appreciated, the leaf spring 40 limits the distance which the nipple can move away from the abutment formation 31a. This is particularly useful in preventing disengagement of the cable from lever 11 prior to final adjustment of the cable on a vehicle assembly line. The leaf spring also limits the extent to which the cable can be inserted into the brake during installation. This prevents over insertion of the cable.

The leaf spring 40 may additionally be arranged to apply pressure to nipple 28 when the nipple is in the fully installed position shown in Figure 3 to assist in retaining the nipple against the end portion 31a of lever 11.

## Claims

1. A parking brake actuating mechanism (10) comprising a first lever (11) having a first contact zone (12) adapted to engage a first brake shoe portion (13), said first lever (11) being pivotally connected (19) with a second lever (15), the second lever (15) having a second contact zone (16) adapted to engage a second brake shoe portion (17), pivoting (P) of the first lever (11) relative to the second lever (15) being arranged to increase the effective length of the mechanism between the contact portions thus moving the associated brake shoe portions (13,15) apart to engage the parking brake, the first lever (11) including an actuating cable abutment formation (31a) against which an actuating cable nipple (28) on a free end of a cable (27) is drawn to move the first lever (11) hence operating the mechanism, the first lever (11) also being of hollow form defining a guide passage (29) through which the free end of the cable (27) is directed from an aperture (24) in the backplate (23) of the associated brake to a location adjacent to the abutment formation (31a) to enable the nipple (28) to be engaged with the formation, and spring means (40) comprising a leaf spring mounted on the first lever (11) to tend to maintain the cable nipple (28) in position for engagement with the abutment formation (31a) on the first lever (11) being **characterised in that** the leaf spring is mounted on the lever (11) in a notch (41) by a clip portion (42) and tabs (43).

2. A parking brake actuating mechanism (10) according to claim 1 **characterised in that** the leaf spring (40) is also shaped (44) to tend to deflect the nipple (28) towards the abutment formation (31a) when it emerges from the passage (29).

3. A parking brake actuating mechanism (10) according to claim 1 or 2 **characterised in that** the leaf spring (40) is shaped to limit the distance which the nipple (28) can move away from the abutment formation (31a).

4. A parking brake actuating mechanism (10) according to any one of claims 1 to 3 **characterised in that** the leaf spring (40) is shaped to apply pressure to the nipple (28) to retain the nipple (28) against the abutment formation (31a).

5. A parking brake actuating mechanism (10) according to any one of claims I to 4 **characterised in that** the guide passage (29) through the hollow lever (11) has a cross section part (30) of which allows the passage therethrough of the cable nipple (28) and part (31) of which is narrow and will not allow passage of the nipple (28), one end (31a) of the narrow portion (31) of the guide passage (29) forming the abutment formation and the spring means (40) tending to maintain the cable (27) in the narrow part (31) of the guide passage (29) after the free end of the cable (27) has emerged from the passage.

6. A parking brake actuating mechanism (10) according to claim 5 **characterised in that** the narrow portion (31) of the guide passage (29) is inclined (29a,29b) to the line of action of the cable (27) to bias the nipple (28) and hence the associated portion of the cable (27) into the narrow portion (31) of the guide passage (29) when the cable (27) is pulled (Z) to operate the mechanism.

7. A parking brake actuating mechanism (10) according to any one of claims 1 to 6 **characterised in that** a guide spring is used to guide the free end (28) of the cable (27) from the aperture (24) in the backplate (23) into the hollow guide passage (29) of the first lever (11).

8. A parking brake actuating mechanism (10) according to claim 7 **characterised in that** the guide spring also acts as a return spring for the parking brake actuating mechanism (10) to help disengage the parking brake when the cable (27) is released.

9. A parking brake actuating mechanism (10) according to claim 7 or 8 **characterised in that** the guide spring comprises a coil spring vending between the backplate (23) and the first lever (11) down the centre of which the cable (27) is threaded.

10. A parking brake actuating mechanism (10) according to any one of claims 1 to 9 **characterised in that** the second lever (15) is also shaped to assist in guiding the nipple (28) into engagement with the abutment formation (31a) when the nipple (28) emerges from the guide passage (29).

11. A parking brake actuating mechanism (10) according to any one of claims 1 to 10 **characterised in that** the mechanism is engaged between portions (13,17) of separate brake shoes (14, 18) or between different portions of a single curved brake shoe.

## Patentansprüche

1. Betätigungsmechanismus (10) für eine Feststellbremse, aufweisend einen ersten Hebel (11) mit einem ersten Kontaktbereich (12), der dazu geeignet ist, einen ersten Bremsschuhabschnitt (13) in Eingriff zu nehmen, wobei der erste Hebel (11) schwenkbar mit einem zweiten Hebel (15) verbunden (19) ist, wobei der zweite Hebel (15) einen zweiten Kontaktbereich (16) aufweist, der dazu geeignet ist, einen zweiten Bremsschuhabschnitt (17) in Eingriff zu nehmen, wobei ein Schwenken (P) des ersten Hebels (11) bezüglich des zweiten Hebels (15) zum Erhöhen der Nutzlänge des Mechanismus zwischen den Kontaktabschnitten eingerichtet ist, wodurch die zugehörigen Bremsschuhabschnitte (13, 15) zur Ineingriffnahme der Feststellbremse auseinander bewegt sind, wobei der erste Hebel (11) eine Betätigungskabelangrenzausbildung (31a) enthält, an die ein Betätigungskabelnippel (28) an einem freien Ende eines Kabels (27) zum Bewegen des ersten Hebels (11) gezogen ist, welcher den Mechanismus dadurch betreibt, wobei der erste Hebel (11) außerdem eine Hohlform aufweist, die einen Führungsdurchgang (29) definiert, durch den das freie Ende des Kabels (27) von einer Öffnung (24) in der Rückenplatte (23) der zugehörigen Bremse zu einer der Angrenzausbildung (31a) benachbarten Stelle geführt ist, um zu ermöglichen, dass der Nippel (28) mit der Ausbildung in Eingriff gebracht ist, und Federmittel (40), die eine Blattfeder aufweisen, welche an dem ersten Hebel (11) zum Erhalten des Kabelnippels (28) in Position zur Ineingriffnahme mit der Angrenzausbildung (31a) an dem ersten Hebel (11) angebracht ist, **dadurch gekennzeichnet, dass** die Blattfeder durch einen Klemmenabschnitt (42) und Zungen (43) an dem Hebel (11) in einer Kerbe (41) angebracht ist.

2. Betätigungsmechanismus (10) für eine Feststellbremse nach Anspruch 1, **dadurch gekennzeichnet, dass** die Blattfeder (40) außerdem zum Ablenken des Nippels (28) zur Angrenzausbildung (31a), wenn er aus dem Durchgang (29) austritt, geformt (44) ist.

3. Betätigungsmechanismus (10) für eine Feststellbremse nach einem der Ansprüche 1 oder 2, **dadurch gekennzeichnet, dass** die Blattfeder (40) zum Begrenzen der Entfernung geformt ist, über die sich der Nippel (28) von der Angrenzausbildung (31a) weg bewegen kann.

4. Betätigungsmechanismus (10) für eine Feststellbremse nach einem der Ansprüche 1 bis 3, **dadurch gekennzeichnet, dass** die Blattfeder (40) zum Ausüben von Druck auf den Nippel (28) zum Halten des Nippels (28) an der Angrenzausbildung (31a) geformt ist.

5. Betätigungsmechanismus (10) für eine Feststellbremse nach einem der Ansprüche 1 bis 4, **dadurch gekennzeichnet, dass** der Führungsdurchgang (29) durch den hohlen Hebel (11) einen Querschnitt aufweist, bei dem ein Teil (30) den Durchgang des Kabelnippels (28) dort hindurch ermöglicht und ein Teil (31) eng ist und den Durchgang des Nippels (28) nicht ermöglicht, wobei ein Ende (31a) des engen Abschnitts (31) des Führungsdurchgangs (29) die Angrenzausbildung ausbildet und das Federmittel (40) dazu neigt, das Kabel (27) in dem engen Teil (31) des Führungsdurchgangs (29) zu erhalten, nachdem das freie Ende des Kabels (27) aus dem Durchgang ausgetreten ist.

6. Betätigungsmechanismus (10) für eine Feststellbremse nach Anspruch 5, **dadurch gekennzeichnet, dass** der enge Abschnitt (31) des Führungsdurchgangs (29) zur Wirkungslinie des Kabels (27) hin zum Vorspannen des Nippels (28) und damit des zugehörigen Abschnitts des Kabels (27) in den engen Abschnitt (31) des Führungsdurchgangs (29) geneigt ist (29a, 29b), wenn das Kabel (27) zum Betreiben des Mechanismus gezogen (Z) ist.

7. Betätigungsmechanismus (10) für eine Feststellbremse nach einem der Ansprüche 1 bis 6, **dadurch gekennzeichnet, dass** eine Führungsfeder zum Führen des freien Endes (28) des Kabels (27) von der Öffnung (24) in der Rückenplatte (23) in den hohlen Führungsdurchgang (29) des ersten Hebels (11) benutzt wird.

8. Betätigungsmechanismus (10) für eine Feststellbremse nach Anspruch 7, **dadurch gekennzeichnet, dass** die Führungsfeder außerdem als Rückholfeder für den Betätigungsmechanismus (10) für eine Feststellbremse zum Helfen beim Lösen der Feststellbremse, wenn das Kabel (27) freigegeben ist, wirkt.

9. Betätigungsmechanismus (10) für eine Feststellbremse nach einem der Ansprüche 7 oder 8, **dadurch gekennzeichnet, dass** die Führungsfeder eine Schraubenfeder, die zwischen der Rückplatte (23) und dem ersten Hebel (11) verläuft, aufweist, an deren Mitte herunter das Kabel (27) eingefädelt ist.

10. Betätigungsmechanismus (10) für eine Feststellbremse nach einem der Ansprüche 1 bis 9, **dadurch gekennzeichnet, dass** der zweite Hebel (15) außerdem zum Unterstützen beim Führen des Nippels (28) in Eingriff mit der Angrenzausbildung (31a), wenn der Nippel (28) aus dem Führungsdurchgang (29) austritt, geformt ist.

11. Betätigungsmechanismus (10) für eine Feststellbremse nach einem der Ansprüche 1 bis 10, **dadurch gekennzeichnet, dass** der Mechanismus zwischen Abschnitten (13, 17) von separaten Bremsschuhen (14, 18) oder zwischen verschiedenen Abschnitten eines einzelnen gekrümmten Bremsschuhs in Eingriff steht.

## Revendications

1. Mécanisme d'actionnement pour frein de stationnement (10) comprenant un premier levier (11) ayant une première zone de contact (12) prévue pour s'engager avec une première portion de patin de frein (13), ledit premier levier (11) étant connecté de manière pivotante (19) à un deuxième levier (15), le deuxième levier (15) ayant une deuxième zone de contact (16) prévue pour s'engager avec une deuxième portion de patin de frein (17), un pivotement (P) du premier levier (11) par rapport au deuxième levier (15) étant prévu pour augmenter la longueur effective du mécanisme entre les portions de contact pour ainsi déplacer les portions de patin de frein associées (13, 15) à l'écart l'une de l'autre pour s'engager avec le frein de stationnement, le premier levier (11) comportant une formation de butée de câble d'actionnement (31a) contre laquelle un raccord de câble d'actionnement (28) à une extrémité libre d'un câble (27) est tiré pour déplacer le premier levier (11), et faire ainsi fonctionner le mécanisme, le premier levier (11) étant également de forme creuse définissant un passage de guidage (29) à travers lequel l'extrémité libre du câble (27) est dirigée depuis une ouverture (24) dans la plaque de support (23) du frein associé jusqu'à un emplacement adjacent à la formation de butée (31a) pour permettre au raccord (28) d'être engagé avec la formation, et un moyen de ressort (40) comprenant un ressort à lame monté sur le premier levier (11) pour avoir tendance à maintenir le raccord de câble (28) en position pour l'engagement avec la formation de butée (31a) sur le premier levier (11), **caractérisé en ce que** le ressort à lame est monté sur le levier (11) dans une encoche (41) par une portion de pince (42) et des languettes (43).

2. Mécanisme d'actionnement pour frein de stationnement (10) selon la revendication 1, **caractérisé en ce que** le ressort à lame (40) est également formé (44) de manière à avoir tendance à dévier le raccord (28) vers la formation de butée (31a) lorsqu'il sort du passage (29).

3. Mécanisme d'actionnement pour frein de stationnement (10) selon la revendication 1 ou 2, **caractérisé en ce que** le ressort à lame (40) a une forme lui permettant de limiter la distance sur laquelle le raccord (28) peut se déplacer à l'écart de la formation de butée (31a).

4. Mécanisme d'actionnement pour frein de stationnement (10) selon l'une quelconque des revendications 1 à 3, **caractérisé en ce que** le ressort à lame (40) est formé de manière à appliquer une pression sur le raccord (28) de manière à retenir le raccord (28) contre la formation de butée (31a).

5. Mécanisme d'actionnement pour frein de stationnement (10) selon l'une quelconque des revendications 1 à 4, **caractérisé en ce que** le passage de guidage (29) à travers le levier creux (11) a une section transversale dont une partie (30) permet le passage à travers elle du raccord de câble (28) et dont une partie (31) est étroite et ne permet pas le passage du raccord (28), une extrémité (31a) de la portion étroite (31) du passage de guidage (29) formant la formation de butée et le moyen de ressort (40) ayant tendance à maintenir le câble (27) dans la partie étroite (31) du passage de guidage (29) après que l'extrémité libre du câble (27) est sortie du passage.

6. Mécanisme d'actionnement pour frein de stationnement (10) selon la revendication 5, **caractérisé en ce que** la portion étroite (31) du passage de guidage (29) est inclinée (29a, 29b) vers la ligne d'action du câble (27) pour pousser le raccord (28) et donc la portion associée du câble (27) dans la portion étroite (31) du passage de guidage (29) lorsque le câble (27) est tiré (Z) de manière à actionner le mécanisme.

7. Mécanisme d'actionnement pour frein de stationnement (10) selon l'une quelconque des revendications 1 à 6, **caractérisé en ce qu'**un ressort de guidage est utilisé pour guider l'extrémité libre (28) du câble (27) depuis l'ouverture (24) dans la plaque de support (23) jusque dans le passage de guidage creux (29) du premier levier (11).

8. Mécanisme d'actionnement pour frein de stationnement (10) selon la revendication 7, **caractérisé en ce que** le ressort de guidage agit aussi en tant que ressort de rappel pour le mécanisme d'actionnement pour frein de stationnement (10) de manière à aider au désengagement du frein de stationnement lorsque le câble (27) est relâché.

9. Mécanisme d'actionnement pour frein de stationnement (10) selon la revendication 7 ou 8, **caractérisé en ce que** le ressort de guidage comprend un ressort à boudin s'étendant entre la plaque de support (23) et le premier levier (11) et le long du centre duquel le câble (27) est enfilé.

10. Mécanisme d'actionnement pour frein de stationnement (10) selon l'une quelconque des revendications 1 à 9, **caractérisé en ce que** le deuxième levier (15) est également formé de manière à faciliter le guidage du raccord (28) en engagement avec la formation de butée (31a) lorsque le raccord (28) sort du passage de guidage (29).

11. Mécanisme d'actionnement pour frein de stationnement (10) selon l'une quelconque des revendications 1 à 10, **caractérisé en ce que** le mécanisme est engagé entre des portions (13, 17) de patins de frein séparés (14, 18) ou entre différentes portions d'un seul patin de frein courbe.
